# FASCICULE DE BREVET EUROPEEN

(11) **EP 2 769 944 B1**
(45) Date de publication et mention de la délivrance du brevet: **06.07.2016**
(21) Numéro de dépôt: 14156191.0
(22) Date de dépôt: 21.02.2014
(51) Int. Cl.: B65G 61/00

(54) **Procédé de préhension d'une couche d'articles et installation correspondante**
Verfahren zur Aufnahme einer Lage von Gegenständen und entsprechende Vorrichtung
Method for picking up a layer of objects and corresponding apparatus

(30) Priorité: 25.02.2013 FR 1351614
(43) Date de publication de la demande: 27.08.2014
(73) Titulaire: CERMEX NEWTEC, 85290 Saint-Laurent-Sur-Sèvre (FR)
(72) Inventeur: Ferre, Laurent, 85290 Saint Laurent sur Sèvre (FR)
(74) Mandataire: Eltzer, Thomas

(56) Documents cités:
- WO-A1-2006/126043
- WO-A1-2007/062778
- WO-A2-2006/000847
- DE-A1-102008 035 330

## Description

L'invention concerne les installations de palettisation et, plus particulièrement, un procédé permettant de saisir une couche d'emballages unitaires afin de la déposer sur une palette ou sur une autre couche déjà présente sur une palette.

Dans le domaine de la palettisation, le palettiseur fait partie de ce que l'on appelle la fin de ligne, c'est-à-dire qu'il reçoit des caisses de produits qui sortent d'une installation de conditionnement à une certaine cadence, laquelle cadence est bien souvent elle-même fixée par les cadences des installations précédentes où s'effectuent la préparation et la confection de ces produits à palettiser. Dans ce contexte, le palettiseur doit répondre à des contraintes de toutes sortes :
- des contraintes liées à la nature des produits qui sont plus ou moins fragiles, plus ou moins stables et plus ou moins réguliers,
- des contraintes liées aux cadences car il n'est pas envisageable d'arrêter une ligne complète de fabrication en dehors des arrêts qui ont été expressément programmés, et
- des contraintes liées à l'environnement immédiat du palettiseur comme la surface disponible pour son implantation, par exemple.

On connait du document FR 2 943 643 une installation qui comprend un palettiseur capable de réaliser des empilements de plusieurs couches d'emballages unitaires. Pour ce faire, le palettiseur est équipé d'une table principale, montée mobile en déplacement vertical et sur laquelle sont posées plusieurs couches successives d'emballages unitaires, les unes sur les autres. La table principale descend au fur et à mesure que les couches d'emballages unitaires sont empilées les unes sur les autres. Deux tables intérimaires, formées chacune par un tablier monté mobile dans des rails entre une position escamotée et une position active, assurent la prise en charge à tour de rôle des couches d'emballages unitaires avant de les déposer sur la table principale ou sur une couche déjà présente sur ladite table principale.

Une telle installation permettrait d'atteindre des cadences plus élevées que celles obtenues avec des palettiseurs tels que ceux décrits dans le document FR 2 897 341, par exemple. A tout le moins, la solution technique du document FR 2 943 643 permet une dépose plus en douceur des emballages unitaires (du type caisses par exemple), ce qui évite d'abîmer les emballages et de risquer d'endommager les produits qu'ils contiennent. Dans le document FR 2 897 341, on propose de créer en amont une couche d'emballages unitaires qui sont orientés suivant une certaine direction grâce à des éléments poussoirs. La couche ainsi formée est alors poussée sur une palette ou sur une autre couche déjà positionnée sur la palette.

On connait par ailleurs du document FR 2 899 203 une table de palettisation qui comporte une sole mobile en une ou deux parties, permettant d'ouvrir une trappe par laquelle la couche d'emballages unitaires est déposée sur une autre couche ou sur une palette. Dans le cas où la sole est en deux parties, ces dernières sont mobiles symétriquement, de part et d'autre d'un axe de symétrie suivant lequel les deux extrémités des deux parties se joignent lorsque la table porte une couche d'emballages unitaires. Une telle table permet de s'adapter à n'importe quelle nature de produits à palettiser, et convient aussi bien aux couches d'emballages unitaires en carton qu'aux pacs de bouteilles à empiler par couches successives sur une palette.

Les solutions techniques précitées présentent l'inconvénient d'être encombrantes : l'installation du document FR 2 899 203 (ou du document FR 2 943 643) doit en effet être suffisamment haute pour permettre un déplacement vertical de la sole mobile pour empiler des couches de caisses les unes sur les autres. Quant à l'installation du document FR 2 897 341, elle nécessite de disposer d'une surface au sol importante, qui puisse accueillir une table sur laquelle la couche de caisses est formée et un espace adjacent à la table, apte à accueillir les palettes sur lesquelles les couches de caisses vont être poussées.

D'autres sortes d'installations ont été développées, qui mettent en oeuvre une tête de préhension capable d'accueillir une couche entière de caisses à palettiser, de façon à déplacer ladite couche jusqu'à une zone où sont disposées les palettes, pour empiler les couches de caisse sur les palettes.

De telles installations occupent un espace au sol plus retreint car l'espace dédié à la palettisation n'a pas à être adjacent au poste où l'on forme les couches de caisses.

Par exemple, le document EP 2 208 695 décrit un robot muni d'une tête de préhension, qui comporte plusieurs tables sur lesquelles une couche entière de caisses peut être embarquée. Une fois la couche de caisses formée, cette couche est poussée latéralement sur la table de la tête de préhension. La tête de préhension peut alors déplacer la couche de caisses jusqu'à un poste comprenant les palettes.

Le document WO 2007 062778 propose une autre solution de tête de préhension. Suivant cette solution technique, la couche de caisses n'est pas poussée dans la tête de préhension, mais elle y est introduite grâce au mouvement d'un tapis monté mobile sur la tête : le mouvement du tapis de la tête est associé au mouvement du tapis de la table sur laquelle repose la couche de caisses, et également à un mouvement de recul de la tête de préhension.

Ainsi, dans les deux dernières solutions précitées, il est nécessaire de prévoir un espace à côté de celui où est formé la couche de caisses, pour y placer la tête de préhension, et /ou la déplacer, de façon à charger la couche dans la tête de préhension.

Enfin, WO2006/126043 divulgue un principe de fonctionnement reposant sur un couple de convoyeurs d'action complémentaire, l'un embarqué dans une tête de préhension, l'autre solidaire d'une table de répartition.

Ce document décrit une installation selon le préambule de la revendication 3.

L'invention vise à proposer une alternative aux solutions proposées dans les documents précités, qui permet un chargement d'une couche d'emballages unitaires (caisse ou autres...) sur une tête de préhension sans avoir à disposer d'espace au voisinage de l'endroit où la couche est formée.

L'invention vise à permettre la préhension, le transport et la dépose de couches complètes d'emballages unitaires entre un point de prise et un point de dépose (comprenant une ou plusieurs palettes) en vue de réaliser une charge constituée de plusieurs couches de même nature ou de natures différentes.

Encore un autre objectif de l'invention est de se passer de poussoirs, nécessaires dans certaines solutions de l'état de la technique citées ci-dessus, lesdits poussoirs permettant de déplacer une couche entière d'emballages unitaires sur la table de palettisation.

L'invention permet de saisir directement la couche à son point de prise.

L'invention concerne, dans un premier temps, un procédé de préhension d'une couche d'emballages unitaires formée sur une table, selon la revendication 1.

De cette façon, les surfaces de chargement flexibles prennent la place des tabliers de la table, ce qui permet de saisir la couche là où elle est positionnée. Ainsi, il n'est pas nécessaire de prévoir un espace à côté de l'endroit où la couche est formée, pour transférer la couche dudit endroit sur le dispositif de préhension.

Le procédé conforme à l'invention peut également comporter une ultime étape suivant laquelle le dispositif de préhension, comprenant ladite couche d'emballages unitaires, est soulevé et suivant laquelle, simultanément, l'un des tabliers que comporte la table est positionné à une extrémité de la table, pour permettre la prise en charge d'une nouvelle couche.

Dans un second temps, l'invention concerne une installation pour soulever, transférer et déposer une couche d'emballages unitaires conformément au procédé qui vient d'être défini, ladite installation comportant :
- une table sur laquelle ladite couche d'emballages unitaires est formée, ladite table étant équipée de moyens de déplacement de ladite couche, et
- un dispositif de préhension comprenant au moins une première surface de chargement flexible mobile entre deux positions, parmi lesquelles une première position escamotée pour définir une ouverture sur le fond dudit dispositif, et une position déployée pour fermer ladite ouverture et définir ainsi ladite surface de chargement, ledit dispositif de préhension étant associé à une unité motrice.

Conformément à l'invention, l'installation est remarquable :
- en ce que la table comprend deux convoyeurs équipés chacun d'une sole montée sur des bandes sans fin, les soles desdits convoyeurs occupant un espace de chargement qui est inférieure à la surface de la table de manière à ménager un espace vide de part et d'autre des deux soles quand les deux soles se rejoignent au centre de la table, les deux soles étant escamotables vers le centre de la table,
- et en ce que ledit dispositif de préhension comporte une seconde surface de chargement flexible, également mobile en déplacement entre deux positions par coulissement dans des moyens de guidage correspondants, les deux positions étant une première position escamotée pour définir une ouverture sur le fond dudit dispositif, et une position déployée pour fermer ladite ouverture, ladite seconde surface de chargement flexible faisant face à ladite première surface de chargement flexible en position escamotée, ladite ouverture dudit dispositif de préhension correspondant sensiblement audit espace de chargement de la table.

L'installation conforme à l'invention peut également comporter les caractéristiques suivantes, prises séparément ou en combinaison :
- les deux dites surfaces de chargement flexibles dudit dispositif de préhension peuvent comporter, à leur extrémité, une latte biseautée. Cela permet de favoriser le passage de la couche entre le convoyeur de la table et les surfaces de chargement flexibles du dispositif de préhension ;

- chaque surface de chargement flexible du dispositif de préhension peut comporter un tablier à lattes ou à rouleaux qui est fixé à une chaîne entraînée en déplacement dans lesdits moyens de guidage par un motoréducteur ;
- le dispositif de préhension peut comporter un ensemble de quatre conformateurs de ladite couche, ledit ensemble étant relié à une structure dudit dispositif, les conformateurs étant réalisés par des panneaux poussoirs qui se font face deux à deux et qui sont montés mobiles sur au moins deux glissières fixées à ladite structure ;
- pour chaque groupe de deux conformateurs se faisant face, les deux conformateurs peuvent être fixés à une courroie sans fin, qui est entraînée en déplacement par un motoréducteur, de manière que les conformateurs se déplacent deux à deux en synchronisme ;
- les soles des deux convoyeurs de ladite table peuvent comporter chacune un convoyeur à lattes; les lattes étant fixées sur au moins une courroie crantée sans fin entraînée en déplacement par un motoréducteur, chaque convoyeur a lattes étant entraîné par un motoréducteur qui lui est propre ;
- les deux convoyeurs à lattes peuvent être de longueurs différentes ;
- la table peut comporte des glissières placées entre les courroies crantées pour supporter lesdites lattes.

Pour pouvoir être exécutée, l'invention est exposée de façon suffisamment claire et complète dans la description suivante qui est, en plus, accompagnée de dessins dans lesquels :
- la figure 1 est une vue d'ensemble, en élévation d'une installation conforme à l'invention ;
- la figure 2 est une vue en élévation d'un dispositif de préhension dans l'installation montrée en figure 1 ;
- La figure 3 montre une partie de la structure du dispositif de préhension, avec des surfaces flexibles en position déployée ;
- La figure 4 montre la partie de la structure du dispositif de préhension avec les surfaces flexibles en position escamotée ;
- La figure 5 montre en perspective une autre partie de la structure du dispositif de préhension ;
- La figure 6 illustre une table d'une installation conforme à l'invention, en perspective ;
- Les figures 7 à 10 montrent, en vue de côté, la table de la figure 6, à chaque étape d'avancement d'une couche d'éléments unitaires sur la table, depuis l'introduction du premier élément de la couche (figure 8) jusqu'à ce que la couche repose entièrement sur la table (figure 10) ;
- La figure 11 montre le positionnement du dispositif de préhension sur la table, en vue de côté ;
- La figure 12 illustre la saisie de la couche d'éléments unitaires par le dispositif de préhension, en vue de côté ;
- La figure 13 montre, en vue de côté, la position des moyens de déplacement de la couche d'éléments unitaires sur la table, juste après la saisie d'une couche par le dispositif de préhension ;
- Et la figure 14 montre, en vue de côté, une autre position des moyens de déplacement, avant la prise en charge d'une nouvelle couche d'éléments unitaires par la table.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

L'installation qui va maintenant être décrite est utilisée pour permettre la préhension, le transport et la dépose de couches complètes d'emballages unitaires entre un point de prise et une (ou plusieurs) palette(s) en vue de réaliser une charge constituée de plusieurs couches de même nature ou de natures différentes sur une (ou plusieurs) palette(s).

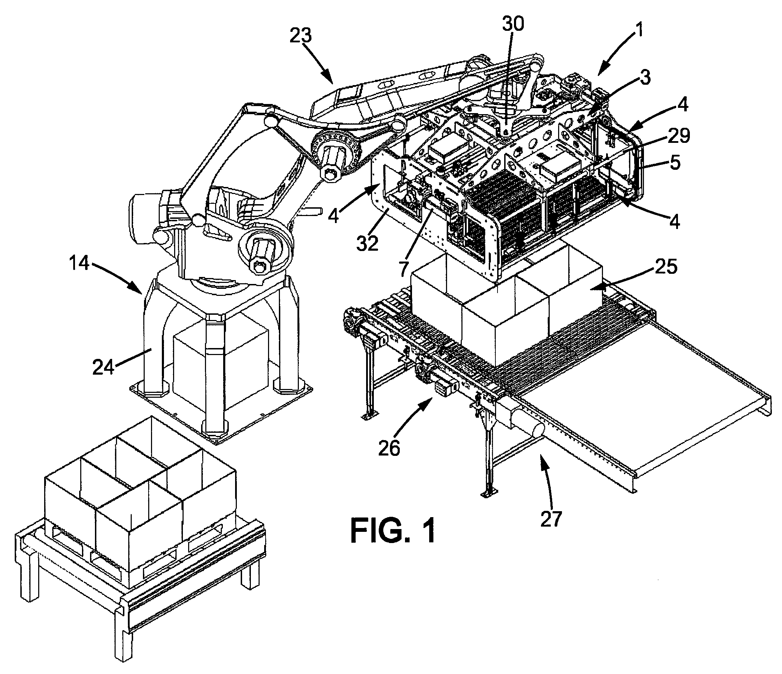

L'installation montrée en figure 1, conforme à l'invention, comporte un robot 14 (ou manipulateur ou unité motrice) du type de ceux comportant un bras 23 articulé (le bras est montré partiellement) et monté pivotant sur une base 24, l'extrémité du bras 23 étant équipée d'un dispositif 1 de préhension. Le robot 14 permet de déplacer le dispositif de préhension vers le haut ou vers le bas, et sur les côtés, de manière à positionner le dispositif de préhension d'un premier point géographique (point de prise) de l'installation à un second point géographique (point de dépose) de l'installation.

L'installation comporte également une table 26 sur laquelle une couche 25 d'emballages unitaires est formée et qui est équipée de moyens de déplacement de ladite couche 25. La table 26 est placée à une extrémité 27 aval d'une installation de convoyage dans laquelle la couche 25 est préformée.

L'invention cible tout particulièrement les effets combinés du dispositif 1 de préhension et de la table 26.

Nous allons, dans un premier temps, décrire le dispositif 1 de préhension, et dans un second temps, décrire la table 26. Le procédé de fonctionnement de l'installation sera décrit en dernier lieu.

Le dispositif 1 de préhension est constitué d'une structure sensiblement parallélépipédique, sur laquelle est fixée une bride 30, permettant sa fixation à l'extrémité du bras 23 du robot manipulateur 14.

Pour ce faire, la structure sensiblement parallélépipédique présente un châssis 3 en partie supérieure, sur lequel la bride 30 est fixée. Le châssis 3 permet également la fixation d'autres éléments comme on le verra par la suite.

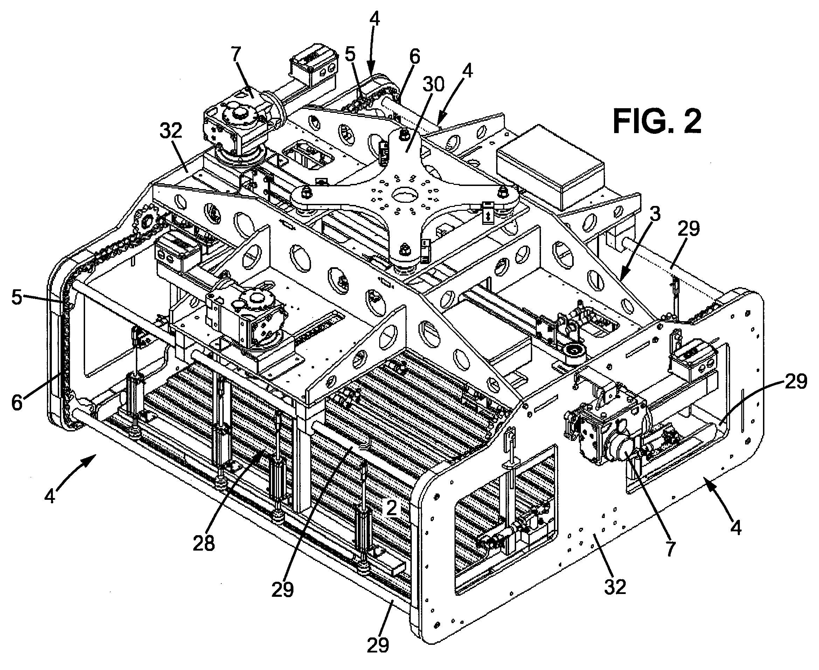

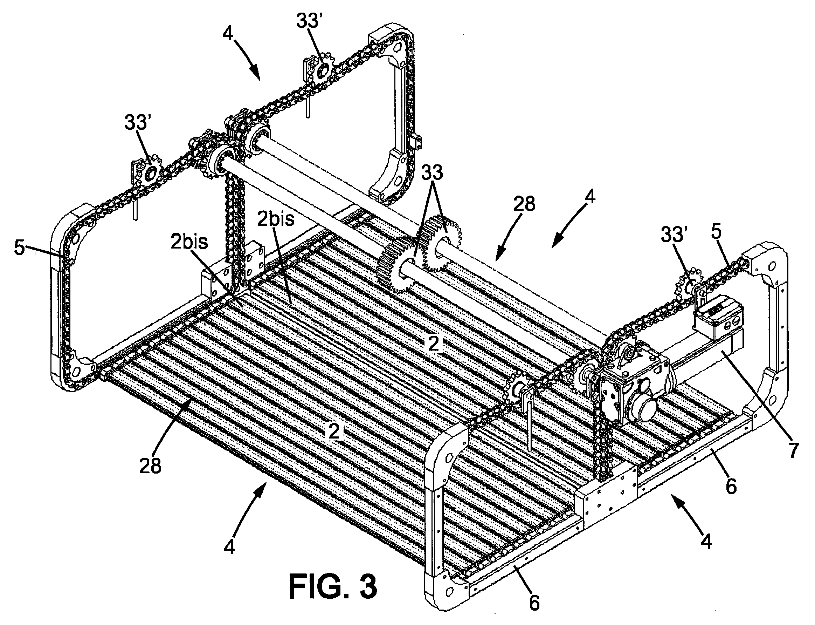

Par ailleurs, la structure sensiblement parallélépipédique est équipée de deux ensembles de rideaux à rouleaux ou à lattes, chaque rideau, du type tablier, formant une surface 2 de chargement flexible (voir figures 2 et 3).

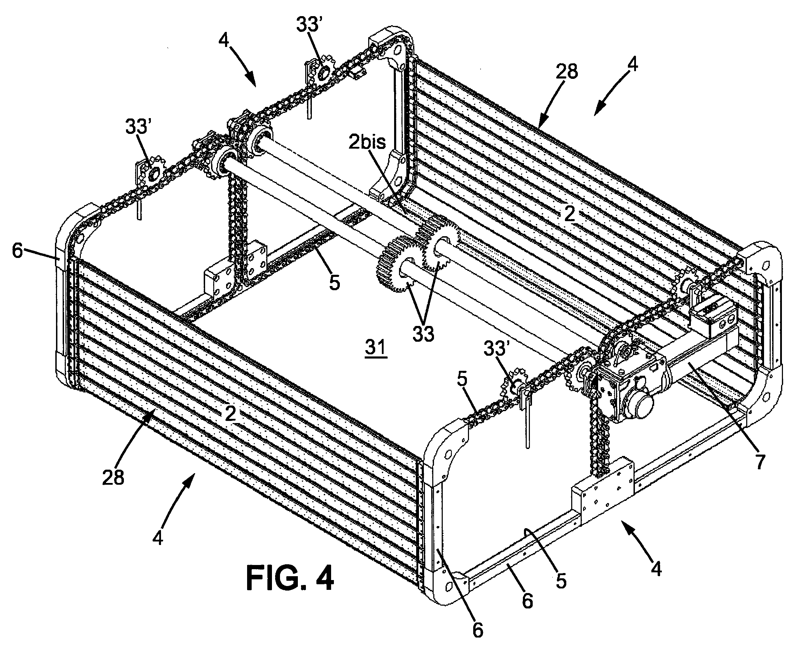

Chaque surface 2 de chargement flexible est montée mobile entre deux positions : une première position escamotée (position montrée sur la figure 4) et une position déployée (position montrée sur les figures 2 et 3).

La position escamotée est la position suivant laquelle les surfaces 2 de chargement flexibles ferment au moins partiellement deux côtés 28 latéraux de la structure parallélépipédique. De cette façon, les deux surfaces 2 de chargement, positionnées sur les côtés de la structure, livrent passage à une ouverture 31 sur le fond de la structure du dispositif 1 de préhension (voir figure 4).

La position déployée est la position suivant laquelle les surface 2 de chargement flexibles ferment ladite ouverture 31 en se rejoignant par l'un de leur bord, et définissent ensemble une surface totale de chargement sensiblement horizontale du dispositif 1 de préhension (voir figures 2 et 3).

Pour assurer le passage des surfaces 2 de chargement mobiles, entre la position escamotée et la position déployée, le dispositif 1 de préhension est réalisé de la façon suivante :
La structure parallélépipédique comporte deux flans 4 verticaux, sensiblement rectangulaires, se faisant face et étant reliés par leurs coins grâce à quatre poutres 29, et deux flans 4 sont réalisés par deux plaques 32 ajourées (voir figure 2) qui portent chacune des glissières 6 dans lesquelles les extrémités des surfaces 2 de chargement flexibles sont guidées lorsqu'elles sont déplacées de leur position déployée à leur position escamotée (et vis et versa).

Deux autres flans 4 sont réalisés par les côtés 28 latéraux parallèles, portant les deux surfaces 2 de chargement flexibles.

Pour ce faire, lesdites extrémités des surfaces 2 sont liées à des chaînes 5 qui sont guidées dans les glissières 6.

Par ailleurs, le mouvement des chaînes 5 est motorisé par un motoréducteur 7 et des pignons 33. Le motoréducteur 7 est porté par une plaque 32 ajourée.

La synchronisation des deux surfaces 2 de chargement flexibles est assurée par deux roues 33' dentées (figure 3) placées au centre des arbres d'entraînement.

On note par ailleurs que chaque surface flexible est équipée, à son extrémité, d'une latte 2bis en biseau (ou bec biseauté), favorisant l'introduction d'une couche de produits dans le préhenseur comme il sera vu par la suite.

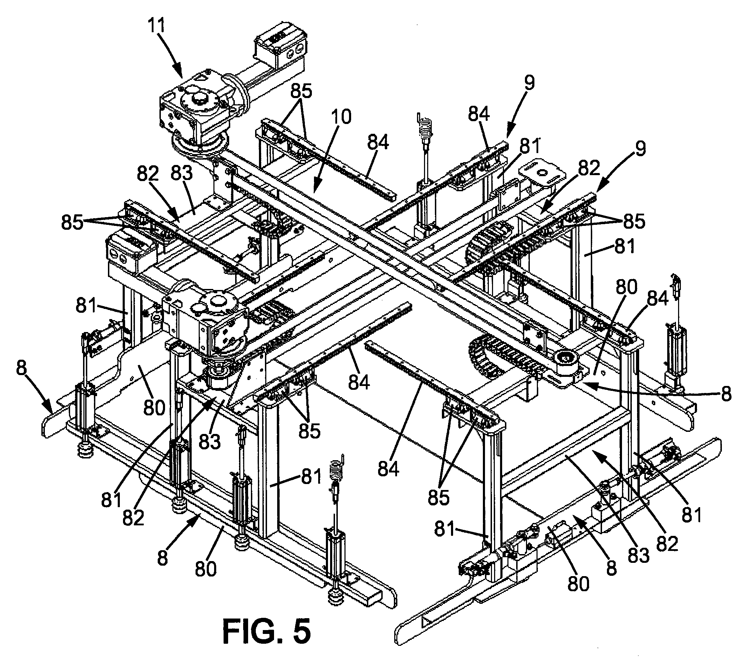

Afin de permettre une mise au gabarit et un centrage d'une couche avant sa dépose, et le maintien de la couche pendant sa dépose, on prévoit que le châssis 3 de la structure parallélépipédique soit équipé de quatre conformateurs 8 mobiles individuellement sur deux glissières 9 (figure 5).

Chaque conformateur 8 comporte un panneau 80 formant poussoir, suspendu en position allongée aux extrémités de deux bras 81 verticaux.

Les deux bras 81 verticaux sont reliés entre eux, en partie supérieure 82, par une poutre 83, de sorte que la poutre 83 soit sensiblement parallèle au panneau 80 formant poussoir pour chaque conformateur 8.

Les coins entre les bras 81 verticaux et la poutre 83 sont équipés de moyens 85 permettant le déplacement des conformateurs 8.

Plus précisément, les quatre conformateurs 8 sont entraînés et synchronisés deux par deux grâce à une courroie 10 et à un motoréducteur 11.

Plus précisément encore, les conformateurs sont fixés aux courroies 10 par des dispositifs de fixation. Lorsque les courroies 10 sont entraînées en déplacement, par le motoréducteur 11 auquel elles sont reliées, les conformateurs 8 sont donc aussi entraînés en déplacement.

Pour un bon guidage des conformateurs, le châssis 3 supérieur de la structure parallélépipédique est équipé de glissières 84 dans lesquelles les moyens 85 de déplacement sont montés mobiles.

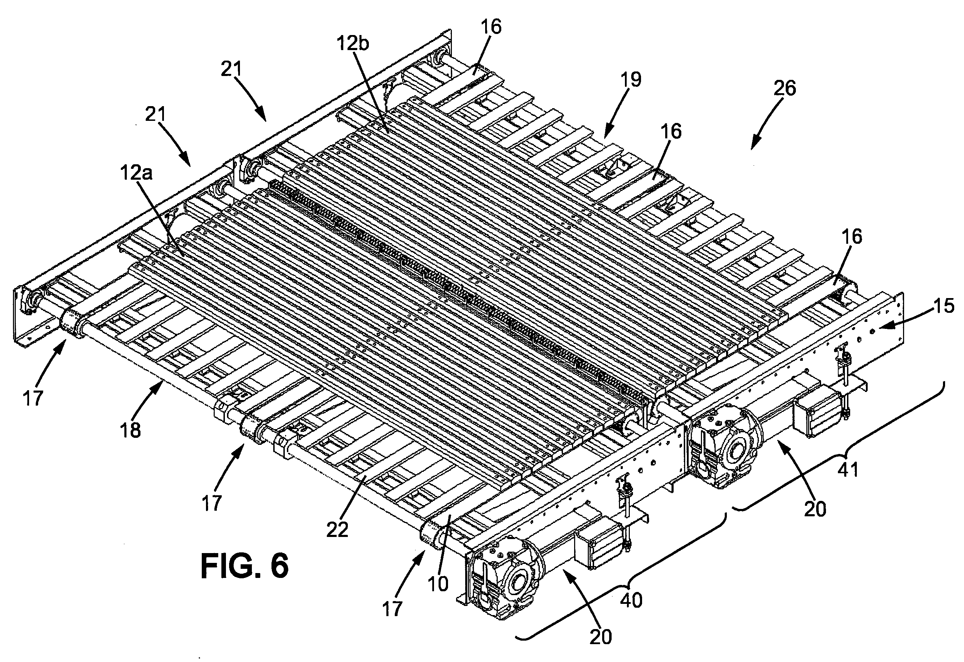

On va maintenant décrire la table 26 conforme à l'installation selon l'invention en faisant référence à la figure 6.

La table 26, comprenant deux convoyeurs 21 à lattes, est indissociable du dispositif 1 de préhension, car ils permettent ensemble de saisir la couche d'emballages à l'endroit où elle se trouve sans devoir la déplacer à l'aide d'un pousseur ou par le mouvement du dispositif 1 de préhension lui-même.

Il est rappelé que les panneaux 8 poussoirs, présentés ci avant, n'agissent sur la couche d'emballage une fois que celle-ci se trouve dans le préhenseur, c'est-à-dire une fois la couche positionnée sur les surfaces 2 de chargement flexibles et mobiles.

La table 26, montrée en figure 6, comprend deux parties 40 et 41 contiguës, chaque partie 40 et 41 comportant un convoyeur 21.

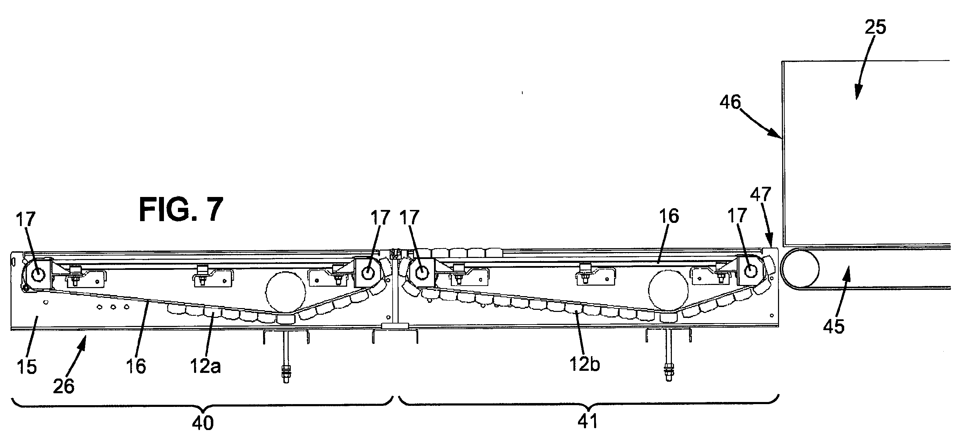

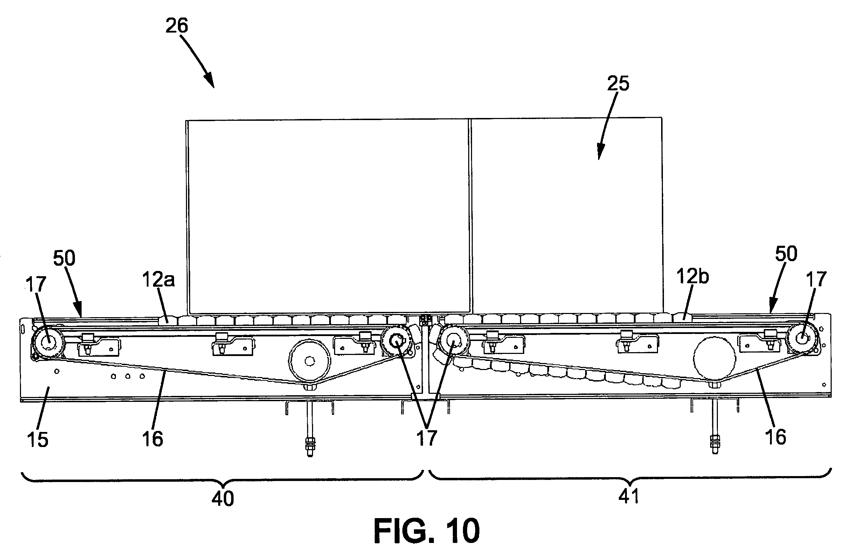

Le convoyeur 21 de la partie 40 est un tablier 12a à lattes, de préférence en plastique, le tablier 12a étant monté mobile en déplacement entre deux positions: une position escamotée suivant laquelle le tablier 12a se trouve escamoté sous le convoyeur 21 (figure 7 par exemple), et une position de support suivant laquelle le tablier 12a se trouve sur le convoyeur 21 (figure 10 par exemple), pour supporter une couche d'emballages unitaires.

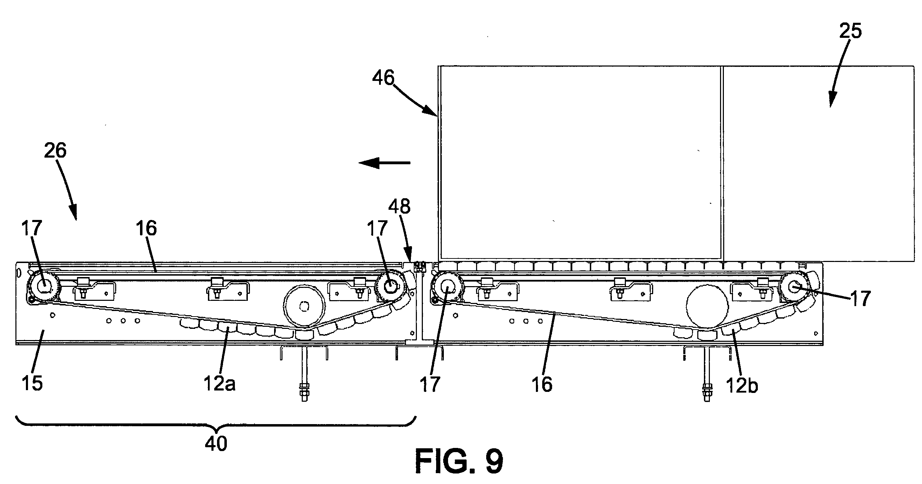

Il en va de même pour le tablier 12b du convoyeur 21 de la partie 41 de la table 26. Le tablier 12b est mobile entre une position escamotée (figure 7) et une position de support (figure 9).

Les tabliers 12a et 12b constituent des soles pour les convoyeurs 21.

Les tabliers 12a et 12b, lorsqu'ils se rejoignent en position de support, recouvrent une surface supérieure de la table 26 qui est inférieure à la surface supérieure totale de la table 26, laissant des espaces 50 supérieurs vides de part et d'autre de la table (voir figure 10).

En positions escamotées, les deux tabliers 12a et 12b se rejoignent sensiblement au centre de la table 26, sous cette dernière.

Il est également à noter que le tablier 12b est plus long que le tablier 12a, car il doit supporter la totalité de la couche lors de son transfert alors que le tablier 12a ne supporte que la moitié de la couche (figure 7).

La mobilité des tabliers 12a et 12b est assurée par l'entrainement en déplacement de trois courroies 16 crantées, sur lesquelles les tabliers 12a et 12b sont fixés, et qui s'enroulent sur des poulies 17 crantées (figure 6).

Les poulies 17 crantées sont montées sur un arbre 18 d'entrainement et un arbre 19 de renvoi (chaque partie 40 et 41 comporte son arbre 18 d'entrainement et son arbre 19 de renvoi).

Enfin, les arbres 18, 19, d'entrainement de chaque partie 40 et 41 sont mis en rotation par un motoréducteur 20.

Entre les courroies 16 crantées, sont prévues des glissières 22 parallèles auxdites courroies 16. Les glissières 22 permettent de mieux supporter les lattes des tabliers 12a et 12b des convoyeurs 21.

L'ensemble des éléments constituant la table 26 est monté sur un châssis 15 (figure 7).

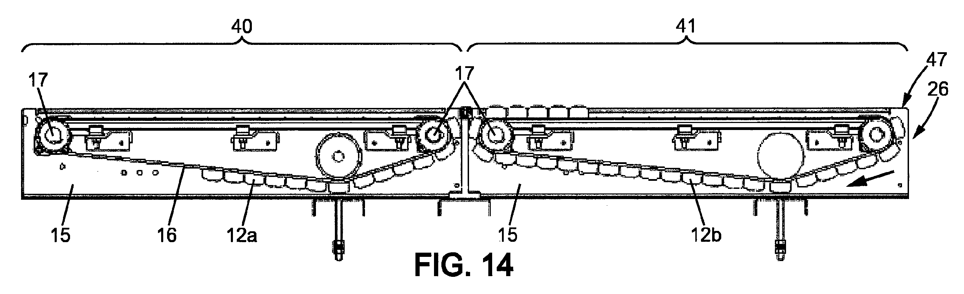

On va maintenant décrire le procédé conforme à l'invention, qui met en oeuvre le dispositif 1 de préhension et la table 26, conforme à l'invention, en faisant référence aux figures 7 à 14.

Initialement, les emballages 25 unitaires sont amenés par un convoyeur 45 jusqu'à la table 26. Sur le convoyeur 45, les emballages unitaires sont rassemblés en une couche 25 d'emballages unitaires.

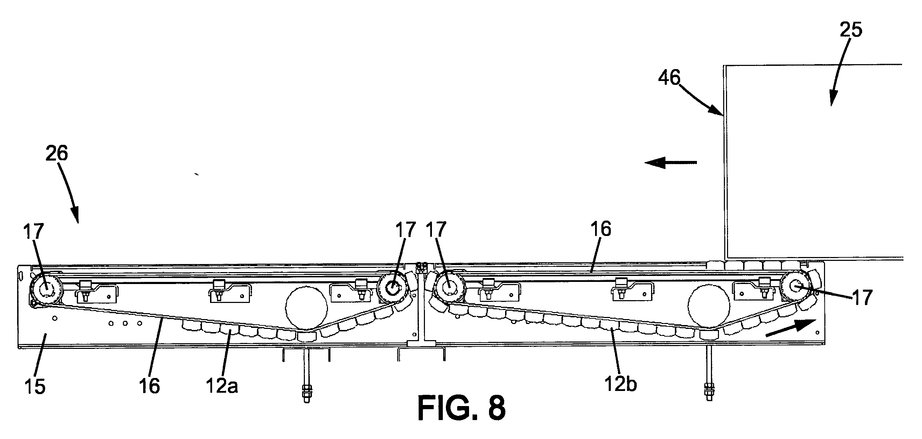

Lorsque l'extrémité 46 de la couche 25 d'emballage unitaire est détectée à proximité de l'extrémité 47 de la table 26, le tablier 12b est entraîné en déplacement (voir figure 8). L'autre tablier 12a, de la partie 40 de la table 26 ne bouge pas.

Le tablier 12b est déplacé de manière à être entièrement recouvert des emballages unitaires de la couche 25 (voir figure 9). Lorsque l'extrémité 46 de la couche est détectée au voisinage de l'extrémité 48 de la partie 40 de la table 26, le tablier 12a est entraîné en déplacement, de sorte que la couche 25 continue d'avancer sur la table 26, sur le tablier 12b et sur le tablier 12a (figure 10).

Lorsque la couche 25 se trouve sensiblement centrée sur la table 26, le tablier 12a se trouve au-dessus de la partie 40 de table 2. Quant au tablier 12b, il se trouve partiellement au dessus et partiellement au dessous de la partie 41 de la table 26 (voir également la figure 10).

Dans cette position, la table 26 présente, de part et d'autre de la couche 25, des espaces vides 50.

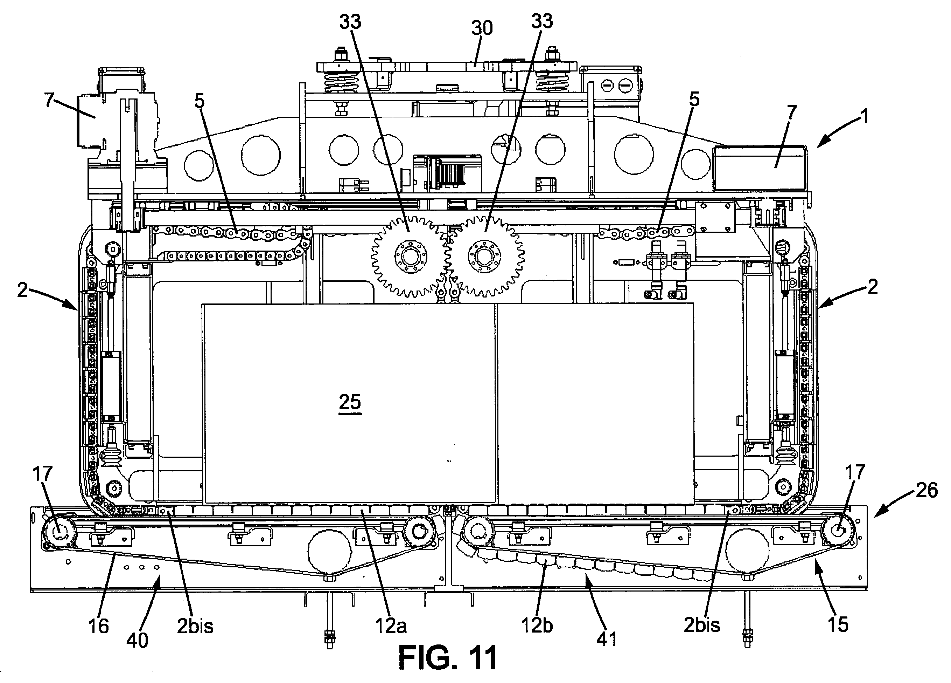

Le dispositif 1 de préhension est alors abaissé (voir figure 11). Plus précisément, les surfaces 2 de chargement flexibles sont en position escamotée et le dispositif 1 de préhension est positionné de telle manière que les extrémités des surfaces 2 de chargement flexibles se placent dans la continuité des tabliers 12a et 12b, dans les espaces 50 vides.

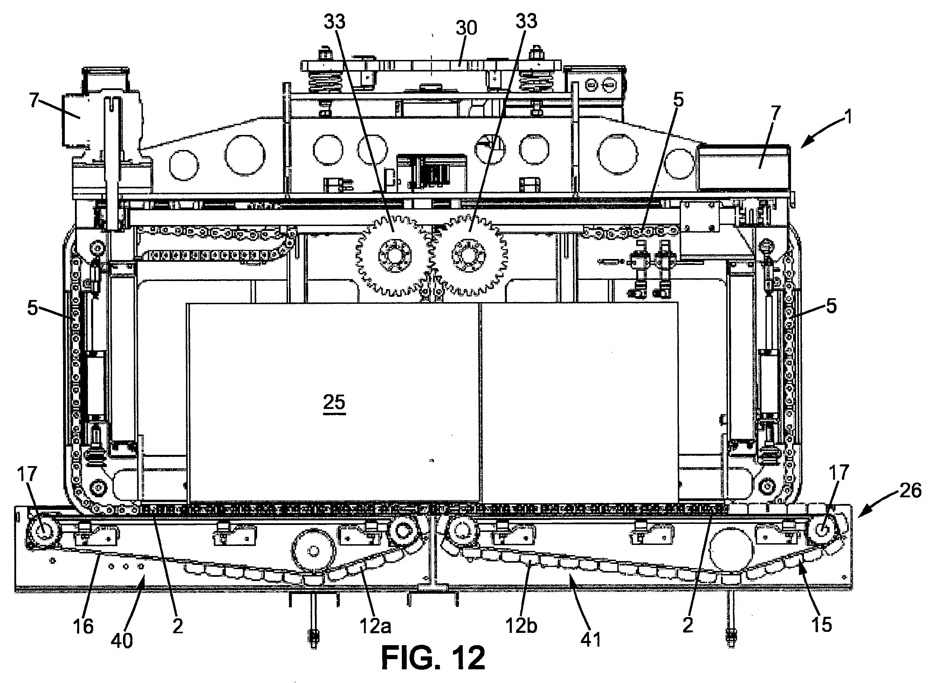

Les surfaces 2 de chargement flexibles se referment alors pour saisir la couche : simultanément, les deux tabliers 12a et 12 b de la table 26 se déplacent pour s'escamoter vers le centre de la couche 25, de manière synchronisée avec le déplacement les surfaces 2 de chargement flexibles. La couche 25 d'emballages unitaires se trouve alors sur les surfaces 2 de chargement flexibles du dispositif 1 de préhension (voir figure 12).

Puis, le dispositif 1 de préhension est relevé et emporte la couche 25 d'emballages unitaires vers un autre poste où la couche sera déchargée sur une palette ou sur une couche déjà en place sur une palette (voir figure 1).

Le déchargement se fera par ouverture des surfaces 2 de chargement flexibles.

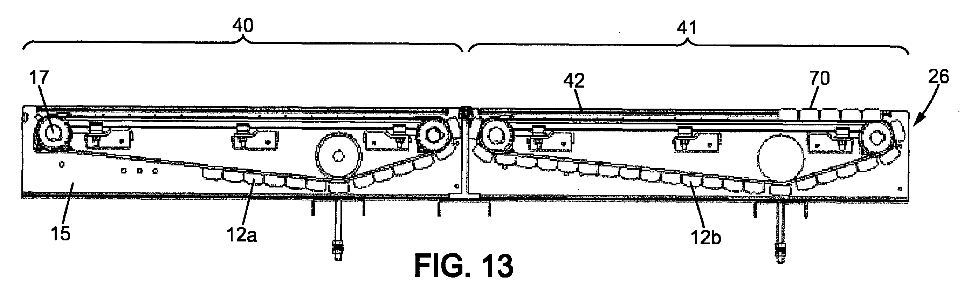

Lorsque le dispositif 1 de préhension est relevé, les tabliers 12a et 12b de la table 26 se trouvent positionnés comme montré en figure 13 : le tablier 12a est entièrement escamoté sous la partie 40 de la table 26. Quant au tablier 12b, comme il présente une longueur supérieure à une surface 42 supérieure de la table. Il présente donc une partie 70 qui recouvre partiellement la surface 42 supérieure.

Or, il est nécessaire que cette partie 70 du tablier 12b se trouve escamotée sous la table pour permettre l'introduction d'une nouvelle couche 25 d'emballages unitaires.

Aussi, suivant une ultime étape du procédé conforme à l'invention, on déplace une dernière fois le tablier 12b de sorte que la partie 70 se trouve escamotée sous la table 26 au niveau de l'extrémité 47 de la partie 41 de la table, extrémité 47 par laquelle une nouvelle couche 25 d'emballages unitaires peut être introduite.

On comprend de ce qui précède comment l'invention permet de saisir une couche 25 d'emballages unitaires à son emplacement, sans avoir à la pousser dans un dispositif de préhension ou sans avoir à déplacer le dispositif de préhension. On comprend dès lors l'intérêt de l'invention qui permet de gagner de la place dans l'espace dédié à une installation de palettisation.

Il devra toutefois être compris que l'invention n'est pas limitée au mode de réalisation qui a été spécifiquement représenté et qu'elle s'étend à la mise en ouvre de tout moyen équivalent.

Enfin, il convient de noter qu'une configuration qui présente deux rideaux 12a, 12b, ou moyens 12a, 12b de déplacement présente l'avantage décrit ci-dessous. Dans certaines configurations de palettisation, il peut être nécessaire d'aménager dans la couche de paquets à superposer sur la palette, un écartement entre les paquets, couramment appelé cheminée. Un tel écartement se trouve alors préférablement au coeur de l'arrangement de la couche de paquet plutôt que sur les côtés, dans le but d'obtenir, au final, une palette avec des couches qui forment ensemble des flans droits verticaux et réguliers sur les quatre côtés. Ainsi, c'est généralement l'entraînement du convoyeur 45 ou autre pousseur dédié, qui vient amener les produits 25 sur la paire de moyens 12a, 12b, de sorte que la configuration obtenue de la couche ne peut pas présenter de cheminée centrale, mais que les paquets sont, au contraire, tous alignés contre un bord. L'avantage de disposer d'une paire de rideaux ou tabliers 12a, 12b est alors qu'ils ont un mouvement antagoniste, ce qui a pour effet d'entraîner les paquets vers les bords extérieurs, d'un côté ou de l'autre, et, en les séparant de la sorte, d'aménager alors, le cas échéant, une cheminée centrale et non plus un décalage sur une face verticale extérieure de l'empilement, ce qui amène naturellement à un empilement de produits bien plus stable et plus facile à manipuler puisque régulier sur ses faces extérieures. En s'ouvrant, chaque tablier 12a ou 12b va donc entraîner dans son propre sens d'ouverture les produits qui reposent sur lui, et ce en les séparant jusqu'à ce qu'ils viennent en butée contre des taquets qui définissent les contours extérieurs de la couche. Un espacement central entre les produits peut alors être créé directement grâce à l'action conjointe de deux tabliers 12a, 12b symétriques et agissant donc en sens opposé, ce qui simplifie bien sûr considérablement le positionnement des paquets dans une couche nécessitant l'aménagement d'une cheminée intérieure.

## Revendications

1. Procédé de préhension d'une couche (25) d'emballages unitaires formée sur une table (26), ladite table (26) comprenant des moyens (12a, 12b) de déplacement de ladite couche (25), à savoir deux tabliers (12a, 12b), montés mobiles en déplacement entre deux positions, à savoir une position escamotée et une position support, le procédé mettant en oeuvre un dispositif (1) de préhension équipé de deux ensembles de rideaux définissant chacun une surface (2) de chargement flexible, montée mobile entre deux positions, parmi lesquelles une première position escamotée pour définir une ouverture (31) sur le fond dudit dispositif (1) de préhension, et une position déployée pour fermer ladite ouverture (31), ledit dispositif (1) de préhension étant associé à une unité (14) motrice, ledit procédé comprenant les étapes suivantes :
- positionnement dudit dispositif (1) de préhension sur la table (26), de sorte qu'une extrémité (2bis) desdites surfaces (2) de chargement flexible soit placée de façon contiguë avec une extrémité des tabliers (12a, 12b),
- de façon simultanée, escamotage des deux tabliers (12a, 12b) et déploiement des deux surfaces (2) de chargement flexibles qui coulissent dans des moyens (6) de guidage correspondants, de sorte que les surfaces (2) de chargement flexibles prennent la place des tabliers (12a, 12b) sous ladite couche (25) d'emballage unitaire sur ladite table (26).

2. Procédé selon la revendication 1, **caractérisé en ce qu'**il comporte une ultime étape suivant laquelle le dispositif (1) de préhension, comprenant ladite couche (25) d'emballages unitaires, est soulevé et suivant laquelle, simultanément, l'un des tabliers (12b) que comporte la table (26) est positionné à une extrémité (47) de la table (26), pour permettre la prise en charge d'une nouvelle couche (25) d'emballages unitaires.

3. Installation pour soulever, transférer et déposer une couche (25) d'emballages unitaires conformément au procédé selon la revendication 1 ou la revendication 2, ladite installation comportant :
- une table (26) sur laquelle ladite couche (25) d'emballages unitaires est formée, ladite table (26) étant équipée de moyens (12a, 12b) de déplacement de ladite couche (25),
- un dispositif (1) de préhension comprenant au moins une première surface (2) de chargement flexible mobile entre deux positions, parmi lesquelles une première position escamotée pour définir une ouverture (31) sur le fond dudit dispositif (1) de préhension, et une position déployée pour fermer ladite ouverture (31) et définir ainsi ladite surface (2) de chargement, ledit dispositif (1) de préhension étant associé à une unité (14) motrice,
ladite installation étant remarquable :
- en ce que la table (26) comprend deux convoyeurs (12a, 12b) équipés chacun d'une sole montée sur des bandes (16) sans fin, les soles desdits convoyeurs (12a, 12b) occupant un espace de chargement qui est inférieure à la surface de la table (26) de manière à ménager un espace vide (50) de part et d'autre des deux soles quand les deux soles se rejoignent au centre de la table (26), les deux soles étant escamotables vers le centre de la table (26),
- et en ce que ledit dispositif de préhension comporte une seconde surface (2) de chargement flexible, également mobile en déplacement entre deux positions par coulissement dans des moyens (6) de guidage correspondants, les deux positions étant une première position escamotée pour définir ladite ouverture (31) sur le fond dudit dispositif (1) de préhension, et une position déployée pour fermer ladite ouverture (31), ladite seconde surface (2) de chargement flexible faisant face à ladite première surface (2) de chargement flexible en position escamotée, ladite ouverture (31) dudit dispositif (1) de préhension correspondant sensiblement audit espace de chargement de la table.

4. Installation selon la revendication 3, **caractérisée en ce que** les deux dites surfaces (2) de chargement flexibles dudit dispositif (1) de préhension comportent, à leur extrémité, une latte (2bis) biseautée.

5. Installation selon la revendication 3 ou la revendication 4, **caractérisée en ce que** chaque surface (2) de chargement flexible du dispositif (1) de préhension comporte un tablier à lattes ou à rouleaux qui est fixé à une chaîne (5) entraînée en déplacement dans lesdits moyens (6) de guidage par un motoréducteur (7).

6. Installation selon l'une quelconque des revendications 3 à 5, **caractérisée en ce que** ledit dispositif (1) de préhension comporte un ensemble de quatre conformateurs (8) de ladite couche (25), ledit ensemble étant relié à une structure dudit dispositif (1) de préhension, les conformateurs (8) étant réalisés par des panneaux (80) poussoirs qui se font face deux à deux et qui sont montés mobiles individuellement sur deux glissières (84) fixées à ladite structure.

7. Installation selon la revendication 6, caractérisée en ce, pour chaque groupe de deux conformateurs (8) se faisant face, les deux conformateurs (8) sont fixés à une courroie (10) sans fin, qui est entraînée en déplacement par un motoréducteur (11), de manière que les conformateurs (8) se déplacent deux à deux en synchronisme.

8. Installation selon l'une quelconque des revendications 3 à 7, **caractérisée en ce que** les soles des deux convoyeurs (12a, 12b) de ladite table (26) comportent chacune un tablier à lattes; les lattes étant fixées sur au moins une courroie (16) crantée sans fin entraînée en déplacement par un motoréducteur (20), chaque tablier (12a, 12b) à lattes étant entraîné par un motoréducteur (20) qui lui est propre.

9. Installation selon la revendication 8, **caractérisée en ce que** les deux tabliers (12a, 12b) à lattes présentent des longueurs différentes.

10. Installation selon la revendication 8 ou la revendication 9, **caractérisée en ce que** ladite table (26) comporte des glissières (22) placées entre les courroies (16) crantées pour supporter les lattes desdits tabliers (12a, 12b) à lattes.

## Patentansprüche

1. Verfahren zur Aufnahme einer Lage (25) für Einzelverpackungen, welche auf einem Tisch (26) ausgebildet ist, wobei der Tisch (26) Mittel (12a, 12b) zum Verschieben der Lage (25) aufweist, nämlich zwei zwischen zwei Positionen verschiebbar beweglich montierte Gitter (12a, 12b), nämlich eine eingefahrene Position und eine Stützposition, wobei das Verfahren eine Aufnahmevorrichtung (1) zum Einsatz bringt, welche mit zwei Vorhanggarnituren ausgerüstet ist, die jeweils eine flexible Ladefläche (2) definieren, welche zwischen zwei Positionen beweglich montiert ist, von welchen eine erste eine eingefahrene Position ist, um eine Öffnung (31) am Boden der Aufnahmevorrichtung (1) zu definieren, und eine weitere eine entfaltete Position, um die Öffnung (31) zu schließen, wobei die Aufnahmevorrichtung (1) mit einer Antriebseinheit (14) verknüpft ist, wobei das Verfahren die folgenden Schritte aufweist:
- Positionieren der Aufnahmevorrichtung (1) auf dem Tisch (26), so dass ein Ende (2bis) der flexiblen Ladeflächen (2) mit einem Ende der Gitter (12a, 12b) in aneinander grenzender Weise platziert sind,
- auf gleichzeitige Weise Einfahren der beiden Gitter (12a, 12b) und Entfalten der flexiblen Ladeflächen (2), welche in entsprechenden Führungsmitteln (6) gleiten, so dass die flexiblen Ladeflächen (2) den Platz der Gitter (12a, 12b) unter der Lage (25) für Einzelverpackung auf dem Tisch (26) einnehmen.

2. Verfahren nach Anspruch 1, **dadurch gekennzeichnet, dass** es einen letzten Schritt aufweist, gemäß dem die Aufnahmevorrichtung (1), welche die Lage (25) für Einzelverpackungen aufweist, angehoben wird, und gemäß dem gleichzeitig das eine Gitter (12b), welches der Tisch (26) umfasst, an einem Ende (47) des Tischs (26) angeordnet wird, um das Beladen mit einer neuen Lage (25) für Einzelverpackungen zu ermöglichen.

3. Einrichtung zum Anheben, Transportieren und Ablegen einer Lage (25) für Einzelverpackungen gemäß dem Verfahren nach Anspruch 1 oder Anspruch 2, wobei die Einrichtung Folgendes aufweist:
- einen Tisch (26), auf welchem die Lage (25) für Einzelverpackungen ausgebildet wird, wobei der Tisch (26) mit Mitteln (12a, 12b) zum Verschieben der Lage (25) ausgerüstet ist,
- eine Aufnahmevorrichtung (1), welche mindestens eine erste flexible Ladefläche (2) aufweist, welche zwischen zwei Positionen beweglich ist, von welchen eine erste eine eingefahrene Position ist, um eine Öffnung (31) am Boden der Aufnahmevorrichtung (1) zu definieren, und eine weitere eine entfaltete Position, um die Öffnung (31) zu schließen und so die Ladefläche (2) zu definieren, wobei die Aufnahmevorrichtung (1) mit einer Antriebseinheit (14) verknüpft ist,
wobei die Einrichtung **gekennzeichnet ist:**
- **dadurch**, dass der Tisch (26) zwei Fördermittel (12a, 12b) aufweist, welche jeweils mit einem auf Endlosbändern (16) montierten Boden ausgerüstet sind, wobei die Böden der Fördermittel (12a, 12b) einen Laderaum einnehmen, welcher unterhalb der Oberfläche des Tischs (26) liegt, derartig, dass beiderseits der beiden Böden ein leerer Raum (50) herbeigeführt wird, wenn sich die beiden Böden in der Mitte des Tischs (26) treffen, wobei die beiden Böden zur Mitte des Tischs (26) hin einfahrbar sind,
- und **dadurch**, dass die Aufnahmevorrichtung eine zweite flexible Ladefläche (2) aufweist, welche durch Gleiten in entsprechenden Führungsmitteln (6) ebenfalls zwischen zwei Positionen verschiebbar beweglich sind, wobei die beiden Positionen eine erste, eingefahrene Position, um die Öffnung (31) im Boden der Aufnahmevorrichtung (1) zu definieren, und eine entfaltete Position sind, um die Öffnung (31) zu schließen, wobei die zweite, flexible Ladefläche (2) gegenüber von der ersten, flexiblen Ladefläche (2) liegt, wobei die Öffnung (31) der Aufnahmevorrichtung (1) im Wesentlichen dem Laderaum des Tischs entspricht.

4. Einrichtung nach Anspruch 3, **dadurch gekennzeichnet, dass** die beiden flexiblen Ladeflächen (2) der Aufnahmevorrichtung (1) an ihrem Ende eine abgeschrägte Latte (2bis) aufweisen.

5. Einrichtung nach Anspruch 3 oder Anspruch 4, **dadurch gekennzeichnet, dass** jede flexible Ladefläche (2) der Ausnahmevorrichtung (1) ein Gitter aus Latten oder Rollen aufweist, welches an einer Kette (5) befestigt ist, welche in den Führungsmitteln (6) durch einen Getriebemotor (7) verschiebbar angetrieben wird.

6. Einrichtung nach einem der Ansprüche 3 bis 5, **dadurch gekennzeichnet, dass** die Aufnahmevorrichtung (1) einen Satz von vier Formgebern (8) für die Lage (25) umfasst, wobei der Satz mit einer Struktur der Aufnahmeeinrichtung (1) verbunden ist, wobei die Formgeber (8) aus Druckplatten (80) ausgeführt sind, welche sich paarweise gegenüber liegen, und welche auf zwei, an der Struktur befestigten Gleitschienen (84) individuell beweglich montiert sind.

7. Einrichtung nach Anspruch 6, **dadurch gekennzeichnet, dass** für jede Gruppe von zwei sich gegenüber liegenden Formgebern (8), die beiden Formgeber (8) an einem Endlosband (10) befestigt sind, welches verschiebbar durch einen Getriebemotor (11) derartig angetrieben wird, dass die Formgeber (8) sich paarweise synchron verlagern.

8. Einrichtung nach einem der Ansprüche 3 bis 7, **dadurch gekennzeichnet, dass** die Böden der Fördermittel (12a, 12b) des Tischs (26) jeweils ein Gitter aus Latten umfassen; wobei die Latten an mindestens einem Endloszahnriemen (16) befestigt sind, welcher von einem Getriebemotor (20) verschiebbar angetrieben wird, wobei jedes Gitter (12a, 12b) aus Latten von einem eigenen Getriebemotor (20) angetrieben wird.

9. Einrichtung nach Anspruch 8, **dadurch gekennzeichnet, dass** die beiden Gitter (12a, 12b) aus Latten unterschiedliche Längen aufweisen.

10. Einrichtung nach Anspruch 8 oder Anspruch 9, **dadurch gekennzeichnet, dass** der Tisch (26) Gleitschienen (22) aufweist, welche zwischen den Zahnriemen (16) angeordnet sind, um die Latten der Gitter (12a, 12b) aus Latten zu stützen.

## Claims

1. Method for picking up a layer (25) of unit repackaging formed on a table (26), said table (26) comprising means (12a, 12b) for moving said layer (25), specifically two aprons (12a, 12b) mounted so as to be able to move between two positions, specifically a retracted position and a support position, the method making use of a picking-up device (1) equipped with two sets of curtains, each defining a flexible loading surface (2) which is mounted so as to be able to move between two positions, including a first, retracted position to define an opening (31) in the bottom of said picking-up device (1), and a deployed position to close said opening (31), said picking-up device (1) being connected to a motive unit (14), said method comprising the following steps:
- positioning said picking-up device (1) on the table (26) such that an end (2bis) of said flexible loading surfaces (2) is placed so as to be contiguous with an end of the aprons (12a, 12b),
- simultaneously, retracting the two aprons (12a, 12b) and deploying the two flexible loading surfaces (2) which slide in corresponding guiding means (6), such that the flexible loading surfaces (2) take the place of the aprons (12a, 12b) beneath said layer (25) of unit repackaging on said table (26).

2. Method according to Claim 1, **characterized in that** it comprises a final step according to which the picking-up device (1), comprising said layer (25) of unit repackaging, is lifted up and according to which, simultaneously, one of the aprons (12b) which the table (26) comprises is positioned at one end (47) of the table (26), in order to allow a new layer (25) of unit repackaging to be loaded.

3. Apparatus for lifting up, transferring and putting down a layer (25) of unit repackaging in accordance with the method according to Claim 1 or Claim 2, said apparatus comprising:
- a table (26) on which said layer (25) of unit repackaging is formed, said table (26) being equipped with means (12a, 12b) for moving said layer (25),
- a picking-up device (1) comprising at least one first flexible loading surface (2) which is able to move between two positions, including a first, retracted position to define an opening (31) in the bottom of said picking-up device (1), and a deployed position to close said opening (31) and thus define said loading surface (2), said picking-up device (1) being connected to a motive unit (14),
said apparatus being **characterized:**
- **in that** the table (26) comprises two conveyors (12a, 12b) each equipped with a sole mounted on endless strips (16), the soles of said conveyors (12a, 12b) occupying a loading space which is smaller than the surface area of the table (26) so as to create an empty space (50) on either side of the two soles when the two soles meet at the centre of the table (26), it being possible to retract the two soles towards the centre of the table (26),
- and **in that** said picking-up device comprises a second flexible loading surface (2) which is also able to move between two positions by sliding in corresponding guiding means (6), the two positions being a first, retracted position to define said opening (31) in the bottom of said picking-up device (1), and a deployed position to close said opening (31), said second flexible loading surface (2) being opposite said first flexible loading surface (2) in the retracted position, said opening (31) of said picking-up device (1) essentially corresponding to said loading space of the table.

4. Apparatus according to Claim 3, **characterized in that** the two said flexible loading surfaces (2) of said picking-up device (1) comprise, at their ends, a bevelled slat (2bis).

5. Apparatus according to Claim 3 or Claim 4, **characterized in that** each flexible loading surface (2) of the picking-up device (1) comprises an apron with slats or rollers which is attached to a chain (5) driven so as to move in said guiding means (6) by a geared motor (7).

6. Apparatus according to one of Claims 3 to 5, **characterized in that** said picking-up device (1) comprises a set of four shapers (8) of said layer (25), said set being connected to a structure of said picking-up device (1), the shapers (8) consisting of pusher panels (80) which are in mutually opposing pairs and are mounted so as to be able to move individually on two rails (84) attached to said structure.

7. Apparatus according to Claim 6, **characterized in that**, for each group of two opposing shapers (8), the two shapers (8) are attached to an endless belt (10) which is driven so as to move by a geared motor (11) such that the shapers (8) move synchronously in pairs.

8. Apparatus according to one of Claims 3 to 7, **characterized in that** the soles of the two conveyors (12a, 12b) of said table (26) each comprise a slatted apron; the slats being attached to at least one endless toothed belt (16) which is driven so as to move by a geared motor (20), each slatted apron (12a, 12b) being driven by its own geared motor (20).

9. Apparatus according to Claim 8, **characterized in that** the two slatted aprons (12a, 12b) are of different lengths.

10. Apparatus according to Claim 8 or Claim 9, **characterized in that** said table (26) comprises rails (22) placed between the toothed belts (16) to support the slats of said slatted aprons (12a, 12b).
